Europäisches Patentamt

European Patent Office

Office européen des brevets

(19)

(11) Publication number: **0 095 845**
A1

(12) **EUROPEAN PATENT APPLICATION**

(21) Application number: **83302709.7**

(22) Date of filing: **12.05.83**

(51) Int. Cl.³: **G 01 N 27/90**

(30) Priority: **28.05.82 US 383020**

(43) Date of publication of application: **07.12.83** Bulletin 83/49

(84) Designated Contracting States: **BE CH DE FR GB IT LI NL SE**

(71) Applicant: **SHUR-LOK CORPORATION, 2541 White Road, Irvine California 92713 (US)**

(72) Inventor: **McMillan, John Dunlop, A203/855 Seagull Lane, Newport Beach California 92663 (US)**

(74) Representative: **Marsh, Roy David et al, Brewer & Son 5-9, Quality Court Chancery Lane, London WC2A 1HT (GB)** .

(54) Nondestructive testing apparatus utilizing eddy currents having an improved probe for use in holes.

(57) In nondestructive testing within the interior of a hole to determine the presence or absence of surface discontinuities through the use of eddy currents it is known to rotate an end of a probe within the hole while concurrently utilizing a sensing structure on the end of the probe in connection with an appropriate operation control structure which serves to give an indication of the presence or absence of such irregularities. A probe (24) capable of being utilized in such an apparatus with holes which vary to a limited extent in diameter can be constructed so that the end (50) of the probe consists of a plurality of separate parts (48). The parts are mounted on the probe so that the spacing of the parts relative to the axis of the probe can be varied as the probe is used.

TITLE: NONDESTRUCTIVE TESTING APPARATUS UTILIZING EDDY CURRENTS HAVING AN IMPROVED PROBE  FOR USE IN HOLES

BACKGROUND OF THE INVENTION

This invention pertains to nondestructive testing apparatus in which eddy currents are utilized in determining the presence or absence of defects such as surface discontinuities.  More specifically it pertains to apparatus as noted of a type primarily designed or intended for use in determining the presence or absence of defects from the interiors of holes.

The use of eddy currents in nondestructive testing is considered to have a number of practical as well as theoretical advantages.  These advantages and the basic techniques of such testing are indicated in a number of different reference works such as the book "NONDESTRUCTIVE TESTING--EDDY CURRENT"; Convair Division, General Dynamics, copyrighted 1979.  Because of the fact that this type of thing is well known and established it is not considered necessary to discuss it in detail in the specification.  In the air craft industry and, of course, in other areas it is increasingly desirable to utilize eddy current type nondestructive testing to determine if there are any defects such as open surface irregularities in the interiors of various holes of various different sizes.

The apparatus normally utilized for this purpose includes an operation control module or member containing a cathode ray tube which is connected by a cord to a hand held test head.  This test head is normally provided with a socket which is adapted to contain any of a series of different probe members having ends of different diameters. These ends are normally of graduated size so as to be capable of fitting within holes of different sizes. Normally an appropriate known sensing member is located within the end of each such probe used and each such probe member is provided with a socket so that this sensing member can be connected up with the operation control member.

For the type of testing involved to be effective the probe must fit closely within the interior of the hole so that the sensing member is located relative to the interior of the hole in such a manner that the spacing between the testing member and the adjacent wall defining the hole remains substantially constant at all times. To achieve this matter or mode of operation preferably the probe and the hole fit with respect to one another more or less as a shaft fits within a bearing. It is quite obviously impossible to achieve such effect when a single probe is utilized with various different holes with somewhat different dimension.

As a consequence of this it is commonplace to utilize an apparatus as noted with a variety of different interchangeable probes which are closely related in dimension so that a probe of the appropriate diameter can always be available for use. This use of a plurality of probes of this type is undesirable inasmuch as it is somewhat of a pain to keep a variety of differently sized probes available and to substitute different probes within an apparatus until one of a desired size is located. As a result of these considerations it is considered that there is a need for improved eddy current type nondestructive testing apparatus to determine the presence or absence of surface discontinuities within holes.

## SUMMARY OF THE INVENTION

A broad objective of the present invention is to fulfill this need by providing new and improved apparatus of the type indicated. More specifically the invention is intended to provide in a testing apparatus of the type described which enables the apparatus to be utilized effectively within various holes differing from one another in diameter a new and improved probe or probe structure. The invention is intended to provide in an apparatus a probe structure which is effective for its intended purpose which may be easily and conveniently manufactured at a nominal cost, which may be easily used and which is effective to give long and reliable service within minimum maintenance.

In accordance with this invention these various objectives are achieved in an apparatus for nondestructive testing utilizing eddy currents, said apparatus having a probe member equipped with an end capable of being inserted within a cylindrical hole, sensing means for use in detecting a surface discontinuity through the use of eddy currents located on said end of said probe, rotation producing means for rotating said probe member about an axis when said end is within a cylindrical hole, operation means for use with said sensing means in order to detect a surface discontinuity connected to said sensing means and located remote from said probe means the improvement comprises: said end consisting of a plurality of separate parts, each of said parts including a curved surface approximating in configuration a part of the internal surface of said hole, said sensing means being located on one of said parts, mounting means holding said separate parts relative to the remainder of said probe in such a manner that the spacing of said parts relative to said axis is capable of being varied, said parts being held by said mounting means so as to be capable of moving outwardly from said axis during the operation of said rotary means.

BRIEF DESCRIPTION OF THE DRAWING

Because of the nature of this invention it is best more fully discussed with reference to the accompanying drawing in which:

Fig. 1 is an isometric view of a presently preferred embodiment or form of an apparatus of the present invention;

Fig. 2 is a side elevational view, partially in section at an enlarged scale of a probe utilized in the apparatus utilized in the preceding figure; and

Fig. 3 is a cross sectional view taken at line 3-3 of Fig. 2.

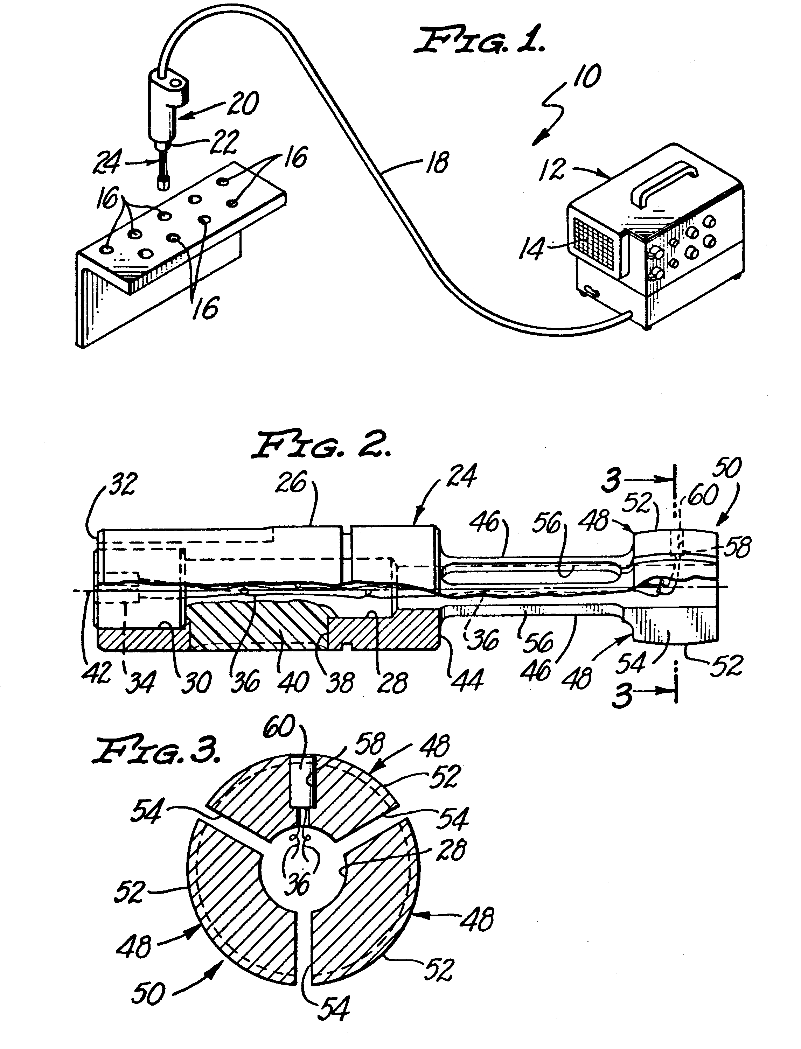

The particular apparatus illustrated in the drawing and subsequently described in the specification is designed and constructed so as to utilize the principles or concepts verbally defined in the appended claims. It is believed that it will be apparent from the remainder of this specification that these principles or concepts may be easily adapted to be utilized in a variety of differently appearing and some differently constructed probes through the use or exercise of routine mechanical skill in the field of nondestructive testing using eddy currents.

DETAILED DESCRIPTION

In the drawing there is shown a complete apparatus 10 in accordance with this invention which includes what is referred to herein as an operation means or operative control means 12 including an oscilloscope 14. This operation means 12 is utilized in operating various functional components as hereinafter indicated so that the shape of an image on the scope 14 will indicate the presence or absence of surface discontinuities (not shown) within a particular hole 16 with which the complete apparatus 10 is used.

The operation means 12 is connected through a cable 18 containing a number of individual wires (not shown) to a test head 20. This head 20 includes a conventional socket 22 which is adapted to hold a probe member 24 in accordance with this invention in such a manner that this probe member 24 will be rotated through the operation of a motor (not shown) within the head 20.

The construction of this probe member 24 is quite important to the present invention. It preferably is formed as a unitary body out of an electrically nonconducting, somewhat resilient polymer composition such as a filled nylon. It includes a generally cylindrical, hollow base 26 having a hollow interior 28. A plug 30 of conventional design is located at an end 32 of the base 26 so as to extend generally into the interior 28. A small non-round electrical socket 34 is located in the plug 30 for the purpose of connecting various wires 36 in the probe member 24 with corresponding conductors (not shown) in the head 20 when the base 26 is located within the socket 22.

If desired a side hole 38 may be provided in the base 26 for the purpose of gaining access to the wires 36 in connecting them to the socket 34. When this hole 38 is used it is preferably sealed over by an appropriate polymer composition 40 which extends into the interior 28. This polymer composition is to be used and chosen so that the weight of the probe member 24 will be equally distributed about the axis 42 of this probe member 24.

An end of the base 26 serves to carry three symmetrical elongated somewhat resilient arms 46 so that these extend outwardly from the base 26 in a symmetrical manner around this axis 42. Each of these arms 46 carries a part 48 of what may be regarded as a complete end 50 composed of the parts 48 on each of the arms 46. These parts 48 are symmetrically around the axis 42. Each of them includes an exterior surface 52 having a shape reasonably approximating a sector or portion of a truncated ellipsoid which has been truncated in planes transverse to its major axis at equal distances on both sides of its other axis.

Thus, the shape of the surfaces 52 reasonably corresponds to the shape of a football as is used in the United States of America at about the center of the football. The parts 48 also include substantially radially extending walls 54 separating the parts 48 from one another. These walls 54 in effect may be regarded as continuations of corresponding walls 56 located between the arms 46. These arms 46 and the parts 48 are identical except as hereinafter described.

One of the parts 48 is provided with a small hole 58 which extends to its exterior 52 at about the midpoint of this exterior 52. A small sensing element or means 60 is located within this hole 58 in a conventional manner so that it will be held steady within it as the complete apparatus is used. This element 60 is connected to various wires 36 as previously described in connection with the socket 34. These wires 36 are preferably secured to this part 48 and its associated arm 46 as shown by any convenient means such as, for example, an adhesive (not shown) so that they will not flop about as the probe member 24 is moved.

It is believed that it will be apparent from the preceding that during the use of the apparatus that the probe member 24 is inserted within any particular desired hole 16 while the operation means 12 is operated while the head 24 is supported so that the end 44 is in place within the hole 16. The probe member 24 can, of course, be rotated after the end 44 is in place. If for any reason the axis 42 is not precisely aligned with the axis of the hole 16 with which the member 24 is used no significant problem will arise because of the shapes of the exteriors 52. A reasonable effort should, however, be made to be sure that there is such alignment so that the sensing element 60 will rotate in a plane transverse to the axis of the hole 16.

As this occurs centrifugal force will tend to throw the surfaces 52 on the part 48 generally outwardly away from the axis 42 into engagement with or proximity to the interior of the hole 16. As this occurs the arms 46 will flex because of their inherent resiliency. As the probe member 24 is turned while being so held the sensing element 60 will detect any surface discontinuity in the portion of the hole 16 adjacent to it and this discontinuity will be visible on the scope 16.

It is considered significant that the particular probe member 24 may be utilized with holes corresponding to holes 16 which differ somewhat in diameter. The arms 46 will normally flex enough as the probe member 24 is used to accomodate holes of different sizes. The curvature of the surface 52 is important in connection with this. Further, the parts 48 can normally be moved together to a limited extent so as to accomodate the probe member 24 to be utilized in a hole 16 of somewhat less diameter than the normal "at rest" diameter of the end 44.

In order to minimize the chances of vibration when the probe member 24 is used it is preferred that the sensing element 60 be of such weight that the part 48 in which it is located is of substantially the same weight of the other parts 48. Normally the wires 36 will be of such little weight as to not cause centrifugal force to produce any significant unequal movement of various parts 48.

The amount to which these parts 48 will move in response to a specific rotational speed will, of course, vary depending upon their weight and the characteristics of the arms 46. The particular arms 46 shown are of a more or less grooved or bowed shape. This tends to restrict their resilience to the point that they are not particularly limber and move only in response to rotation of the member 24 at a conventional speed for use in making readings with the apparatus 10.

It is not to be presumed from the preceding that this apparatus need utilize only three of the parts 48 at the end 44. In theory two of these parts 48 can be satisfactorily used. However, when only two parts 48 are used in connection with a hole such as the hole 16 which is significantly missized relative to the end 44 the exteriors 52 will not effectively constitute a substantially continuous curved surface of rotation and as a result there is a reasonable chance of a degree of chattering or other vibration occuring. The chances of any such eventuality becomes significantly minimal as increasing numbers of different parts 48 are used. Since effective results are achieved by only using three parts 48 it is considered that it would be an economic waste to utilize more than this number of these parts.

CLAIMS:

1. In an apparatus for nondestructive testing utilizing eddy currents, said apparatus having a probe member equipped with an end capable of being inserted within a cylindrical hole, sensing means for use in detecting a surface discontinuity through the use of eddy currents located on said end of said probe, rotation producing means for rotating said probe member about an axis when said end is within a cylindrical hole, operation means for use with said sensing means in order to detect a surface discontinuity connected to said sensing means and located remote from said probe means the improvement comprises:

said end consisting of a plurality of separate parts,

each of said parts including a curved surface approximating in configuration a part of the internal surface of said hole,

said sensing means being located on one of said parts,

mounting means holding said separate parts relative to the remainder of said probe in such a manner that the spacing of said parts relative to said axis is capable of being varied,

said parts being held by said mounting means so as to be capable of moving outwardly from said axis during the operation of said rotary means.

2. An apparatus as claimed in claim 1 wherein:
said mounting means are resilient arms.

3. An apparatus as claimed in claim 2 wherein:
there are three of said arms and three of said parts, each of said parts being carried by one of said arms.

4. An apparatus as claimed in claims 2 or 3 wherein:

said probe member includes a base,

said arms are mounted on said base so as to extend therefrom substantially parallel to one another and are spaced from one another around said axis,

said parts are located on the extremities of said arms remote from said base,

said arms and said base are symmetrical about said axis.

FIG.1.

FIG.2.

FIG.3.

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-4 134 067 (R.K. WOODBURY) <br> * Claim 1; abstract; figure 1 * | 1 | G 01 N 27/90 |
| A | DE-A-2 949 828 (KONTROLLTECHNIK GESELLSCHAFT FÜR MATERIALPRÜFUNG MBH) <br> * Claims 1, 6, 9, 10; figures 2-4 * | 1-4 | |
| A | US-A-4 262 425 (J.G. SABATO) <br> * Claims 1, 4, 5; abstract; figures 1-3 * | 1,2,4 | |

TECHNICAL FIELDS
SEARCHED (Int. Cl. ³)

G 01 N 27/00

The present search report has been drawn up for all claims

| Place of search | Date of completion of the search | Examiner |
|---|---|---|
| BERLIN | 23-08-1983 | HOFMANN D G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82